# EUROPEAN PATENT SPECIFICATION

(11) **EP 3 022 109 B1**
(45) Date of publication and mention of the grant of the patent: **25.10.2017**
(21) Application number: 14826008.6
(22) Date of filing: 04.07.2014
(51) Int. Cl.: B62D 25/00, B60N 2/015

(54) **FLOOR FOR A VEHICLE AND ITS METHOD FOR PRODUCTION, AND VEHICLE WITH SUCH FLOOR**
BODEN FÜR EIN FAHRZEUG UND VERFAHREN ZUR HERSTELLUNG SOWIE FAHRZEUG MIT SOLCH EINEM BODEN
PLANCHER POUR VÉHICULE ET SON PROCÉDÉ DE PRODUCTION ET VÉHICULE ÉQUIPÉ DUDIT PLANCHER

(30) Priority: 19.07.2013 DK 201370408
(43) Date of publication of application: 25.05.2016
(73) Proprietor: VBI Minibus & Components APS, 6200 Aabenraa (DK)
(72) Inventor: HANSEN, Finn, DK-6440 Augustenborg (DK)
(74) Representative: Olesen, Birthe Bjerregaard
(86) International application number: PCT/DK2014/050201
(87) International publication number: WO 2015/007288

(56) References cited:
- EP-A1- 0 685 380
- WO-A1-2006/048632
- WO-A1-2006/048632
- WO-A1-2007/003198
- DE-A1-102012 212 305
- DE-U1-202011 051 401
- US-A1- 2003 143 052

## Description

### FIELD OF THE INVENTION

The present invention relates to floor plates in a vehicle, for example a minibus, where the floor plate is assembled from a number of plate elements and rail members and mounted into the bottom of a vehicle. Especially, the invention relates to a method for mounting seats in a vehicle with a vehicle body and an interior space; the method comprising providing dimensions of a bottom of the interior space, assembling a floor plate according to these dimensions remote from the vehicle, inserting the assembled floor plate into the interior space, and fastening the assembled floor plate to the bottom; the floor plate having an upper side for mounting seats and an underside for abutting the bottom.

### BACKGROUND OF THE INVENTION

A variety of different floor plate assemblies are known in connection with mounting of seats in the vehicle. Such floor plates comprises parallel rail members for mounting seats in the rail members and a plurality of plate elements separating the rail members, which are glued or screwed to the vehicle bottom. The seats in the cabin and the rail members are adapted such that the seats may be secured to the rail members. The plate elements are usually plywood which is covered by a carpet or thin polymer covering, for example vinyl. The plate elements are possibly interconnected below the rail members as an alternative to separating the rail members. The floor plate is fixed to the vehicle bottom for example by gluing. The rail members may also be screwed or bolted to the vehicle bottom, which is often a corrugated metal plate.

Floor plates may be mounted in a vehicle by inserting piece after piece onto the bottom of the vehicle. Alternatively, a floor plate may be assembled before inserting it into a vehicle. The latter eases production but has the difficult requirement of the entire plate being lifted into the vehicle without damaging the vehicle or the plate.

European patent application EP1028885 discloses a first type of floor for a vehicle which is built up with reversed U-profiles with a plurality of recesses for receiving securing means for the seats.

This floor of EP1028885 has an advantage of being flexible with respect to positioning of the seats. However, this type of floor lacks sufficient lateral stability in order to be suitable for assembly outside the vehicle and insertion into the vehicle as a preassembled floor plate. In addition, this floor, as illustrated in EP1028885, lack support under the floor in the regions of cut-outs, such as around the wheel housings, which is a great disadvantage. Thus, this floor is flexible with respect to mounting positions of the seat but does not have a high degree of stability, neither before nor after mounting.

European patent application EP1028885 also discloses a second type of floor made of aluminium profiles interconnected along side flanges to form a rigid plate.

In this second type of floor of EP1028885, the distance between the mounting rails for the seats have a pre-defined distance, determined by the width of the extruded profiles between the rails. For each desired distance between the rails, special profiles have to be produced, because the profiles cannot be cut longitudinally to adjust the distance, as this would damage the necessary side flanges of the profiles. Thus, this floor has a high rigidity but lacks flexibility for adjustment of the distance between the rails.

A structurally rather similar modular system as this second type of floor of EP1028885 is disclosed in International patent application WO2006/048632 with similar disadvantages.

Other modular floor plates for vehicles are disclosed in European patent applications EP0685380 and EP2641777, and German patent publication DE102012212305.

Thus, there is still a need for improvement in the art.

### DESCRIPTION / SUMMARY OF THE INVENTION

It is therefore the object of the invention to provide an improved floor plate for vehicles. Especially, it is an objective to provide a floor plate that, on the one hand, is rigid enough for being produced remote from the vehicle and inserted after assembly, and which, on the other hand, has a high degree of flexibility for adjusting the distance between the rails with the mounts for seats.

This objective is achieved with a method for production of a floor plate and with a floor plate as explained in the following.

The method relates to mounting seats in a vehicle, where the vehicle has a body with an interior space which has a bottom onto which a floor plate is to be provided. The term "an interior space" need not necessarily cover the entire internal space of a vehicle but will typically relate to that part of the vehicle behind the driver, where seats are arranged in rows for passengers, such as in a minibus.

Before assembly of the floor plate, dimensions are provided of a bottom of the interior space. The term "bottom of the interior space" relates to that part of the bottom in which the floor plate with the rows of seats are to be provided for the passengers but need not necessarily include the bottom around the driver's seat. A skilled person in the art is aware of the differentiation between the interior space for the passengers behind the driver and the interior space for the driver and is aware about the corresponding bottoms in the vehicle.

In a first embodiment, a floor plate according to these dimensions is assembled remote from the vehicle and subsequently inserted into the interior space and fastened to the bottom. Despite the fact that a floor plate before insertion into the vehicle has various orientations, especially during the assembly phase, it is nevertheless justified to use the terms "upper side" and "underside" for the floor plate, as these sides are well defined irrespectively of the orientation of the floor plate, because the upper side of the floor plate is used for mounting seats and the underside is configured for abutting the bottom when inserted into the vehicle.

It is also mentioned that the bottom of the vehicle or part of the bottom of the vehicle, which is selected for seat mounting, in some embodiments is covered by a single floor plate. For minor vehicles, this is an advantageous option. However, for larger vehicles, two, three or four, or even more floor plates may be provided which in combination cover the bottom that is desired equipped with seats.

The assembled floor plate comprises a plurality of plate elements and a plurality of parallel rail members. Advantageously, the plate elements are made of a different material, for example plywood or polymer, than the rail members. Alternatives are composites plates including fibres, such as glass fibres or carbon fibre, sandwich plates with surfaces enforced by glass fibres or carbon fibres and an inside foam, The rail members, in turn, are typically provided as metal profiles, for example extruded aluminium profiles, although it is possible, in principle, to provide such rail members as special hard polymer. Such special hard polymer would typically be relatively expensive, why the plate elements would reasonably be made of a different material, for example plywood or a different, less costly polymer.

The parallel rail members have connection means for fastening seats with their supports in the connection means. As already explained, this feature also defines the upper side of the floor plate.

The assembly of the floor plate comprises the steps of assembling a plate structure from a plurality of plate elements and with at least one plate element between each two parallel rail members. For example, if there are only two rail members, a single plate elements with a specifically adapted width is sufficient to be provided to keep a desired distance between the rails, although it is possible to provide a plurality of plate elements between two parallel rails.

For example, by providing the plate elements as plywood planks, the distance between the rails can easily be adjusted, as the plywood plank can be quickly and easily cut longitudinally at low cost to provide exactly the desired distance between the rails. This is a first important feature of the invention.

For example, the plywood plank is then glued to the rails in order to provide a first solid connection. However, it is also possible, especially when using polymer plate elements, to provide the plate elements and the rail members with mutual tongue and groove connections or clamp connections that fasten the plate elements to the rail members. Such a connection makes the assembly faster.

Once, a pair of rails has been assembled with one or more plate elements in between, further plate elements are provided on either side of the pair of rails. Often, a second pair of rails is provided parallel to the first pair of rails. Correspondingly, plate elements are provided not only between the rails in each pair of rails but also between the two or more pair of rails.

The plate elements, advantageously, have a light weight despite a high stability and rigidity. For example, the thickness of the plate elements is less than 15 mm, less than 12mm or less than 10 mm, for example 8 to 10 mm or 9 mm. Typically the plate elements are smooth and without holes and will be covered with a carpet material or a polymer sheet, such as vinyl.

This may imply, however, that the height of the rail members is larger than the thickness of the plate elements. In order, on the one hand, to provide an equalisation of the height of plate elements relatively to the rail members, and on the other hand provide a good stability and support of the plate elements on the bottom of the vehicle, the following technical solution can be used as an option. In this case, support profiles are fastened to the plate elements on only one side the floor plate, which is the underside of the floor plate. The support profiled support the plate elements against the bottom.

In some embodiments, in contrast to the above mentioned EP1028885, the support profiles are not abutting the rail members but have a distance to the rail members, for example of at least 2 cm, at least 5 cm, or at least 10 cm, or at least 15 cm, or at least 20 cm.

The rail members and the plate elements are thus assembled into a plate structure, which is part of the final floor plate and a preliminary assembly state before finalising into the final floor plate. This plate structure has a first edge and a second edge extending in a perpendicular direction relatively to the parallel rail members and at opposite ends of the parallel rail members and plate elements.

Typically, the rail members would be provided in the longitudinal direction of the vehicle with the edges being at the ends of a floor plate, although a transvers direction of the rails is in principle possible. The term "end" has to be understood in a broad term and does not necessarily mean that it is at the narrow edge of the floor plate, although often, the floor plate would have an elongate shape and the ends would actually be the narrow edges of the floor plate.

In order to achieve a high mechanical rigidity of the floor plate against bending in a plane normal to the parallel rail members, the following assembly steps are performed before inserting the final floor plate into the interior space of the vehicle. A first straight, rigid profile of a length corresponding to the length of the first edge of the plate structure is fastened to and along this first edge, for example at the first end of a rectangular plate structure. In order to even increase the rigidity, also a second straight, rigid profile may be provided of a length corresponding to the length of the second edge and fastened to and along the second edge. For example, the final floor plate is largely rectangular with rails along its longitude and with one or two straight, rigid profiles at its ends.

The first and/or second straight, rigid profiles are conveniently fastened to the rail members or to the plate element or to both with fastening elements different from glue or in addition to glue. In case that there are provided support profiles under the plate elements, the first and/or second straight, rigid profiles may also be fastened to these with glue and/or fastening elements. For example, such fastening elements are screws or bolts, although also other possible fastening elements are possible, for example rivets, clamps, or tongue and groove connections.

Advantageously, the fastening elements are used to tightening the ends of the rail members close and solidly to the first straight rigid profile or to the second rigid profile or to both. This implies that identical rail members are fully aligned across the floor plate. This is important, as some of the rails of the rail members have corrugated slots for receiving correspondingly corrugated profiles, and the tolerances for the positioning of each two rail members relatively to each other is very small, typically in the order of mm in order for a seat to smoothly fin into the corrugated slots. The latter puts stringent demands on the construction of the floor plate. Especially in cases, where the floor plate is assembled inside the vehicle, problems arise with assembly within such narrow tolerances, especially due to the fact that the components may slide relatively to each other before the glue on the bottom is hardened sufficiently. The use of straight, rigid profiles to align the rail members is an easy means for solving this general problem.

In some advantageous embodiments, the first straight, rigid profile has two parallel flanges extending from one side of the first straight and along the first rigid, straight profile. When mounted onto the edge of the plate structure, the first of the two flanges abuts the plate elements on the upper side of the floor plate and the second of the two flanges abuts the support profiles and/or the rail members on the underside of the floor plate.

After assembly of the floor plate and transport of the floor plate to the vehicle, it is inserted into the vehicle. Typically, it is glued to the bottom and/or secured by screws or bolts through the bottom. Finally, seats are fastened with their supports in the connection means of the rail members. In order to make the vehicle more comfortable for the passengers, the plate elements can be covered with carpet or polymer sheeting, such as vinyl flooring.

It should be pointed out, specifically, that the production method has a further important advantage over prior art. Due to the use of plate elements that are fastened to the rail members, the plate elements can be provided with a surface cover, such as carpet or vinyl, before the assembly. In comparison, a system of modular extruded aluminum profiles, for example as disclosed in EP1028885 can only be covered after the assembly due to the gluing of the side flanges of the profiles. However, as the carpet or vinyl, on the one hand, typically is fastened with double-sided gluing tape and, on the other hand, has to be pushed underneath an edge of the rail members, this is very difficult to achieve if the carpet or vinyl is mounted after the assembly. The invention allows a solving of this general problem in an easy manner.

The further advantage arising from this fact is the possibility of providing the components of the floor plate as a not-yet-assembled assembly-kit with correctly dimensioned plate elements, for example already equipped with carpet or vinyl, rail members, and optional support profiles, as well as straight, rigid profiles. According to an assembly plan delivered from the basic producer together with the assembly-kit, the floor plate, after transport to the point-of-use, can be easily assembled on site before being lifted into the car. Thus, one basic producer would receive the specifications for a floor and produce the components in an assembly-kit for transport in a relatively small and easy to transport box, whereas the receiver would then quickly be able to assemble the floor plate, before lifting it into a car. This model of separating production of components for the floor plate and assembly thereof provides greater flexibility than with most systems on the market and, therefore, has increased market potential and a potential for lower costs.

For example, the method comprising receiving dimensional parameters for a specific vehicle bottom at a producer site, for example for a minibus; providing components for a floor plate including a plurality of rail members and plate elements, as well as the first straight, rigid profile and, optionally also the second, straight, rigid profile. In addition, a plurality of support profiles is included. The next step is to shape the components according to the parameters in order to provide the floor plate, covering the specific vehicle bottom if assembled. For example, in order to cover the entire floor, if this is large, two, three or four, or even more floor plates are provided, including cut outs for wheel boxes, if present in the dimensional parameters. Once, the components are shapes appropriately, the components are packed as an assembly-kit into a box, and send to a receiver remote from the producer site for assembly before insertion into the specific vehicle.

Especially in connection with transport of disabled in wheel chairs, an easy access to the upper side of the floor plate in the vehicle is necessary, for example from the lift or platform behind the vehicle, such as a minibus. For this reason, in a further embodiment, a ramp profile is provided with a flat upper side and fastened to and along the first straight, rigid profile. Once, the floor plate is mounted in the vehicle, the ramp profile extends in an inclined angle from one the upper side of the floor plate downwards in order to provide a smooth inclined ramp to the upper side of the floor plate.

In summary, in order to prepare seat installation in a vehicle, a floor is prepared remotely then inserted into the bottom of the vehicle. The floor plate has an upper with rail members for mounting seats. The rail members are separated by the plate elements forming the floor together with the rail members. In order to ensure a proper stability of the floor plate before insertion into the car, a straight rigid profile is provided at one end or two ends of the floor plate.

### SHORT DESCRIPTION OF THE DRAWINGS

The invention will be explained in more detail with reference to the drawing, where
- FIG. 1: illustrates some basic components of a floor plate, where a) is a figure of a part of a floor plate; b) is a figure of a support profile; c) is a figure of a rail member;
- FIG. 2: illustrates a first rigid profile in a) cross section and b) on a cross sectional view when mounted to at least one end of a plate structure as part of a floor plate;
- FIG. 3: is a perspective view of a plate structure illustrating a) an entire plate structure with 4 pairs of rail members and b) an enlarged section which shows a corrugated slot; c) a further enlarged section showing a vinyl covering of the floor;
- FIG. 4: shows a rail member with indicated exemplary dimensions in a) side view and b) top view
- FIG. 5: shows a floor plate with a seat in a) overview perspective, b) enlarged ramp region.

### DETAILED DESCRIPTION / PREFERRED EMBODIMENT

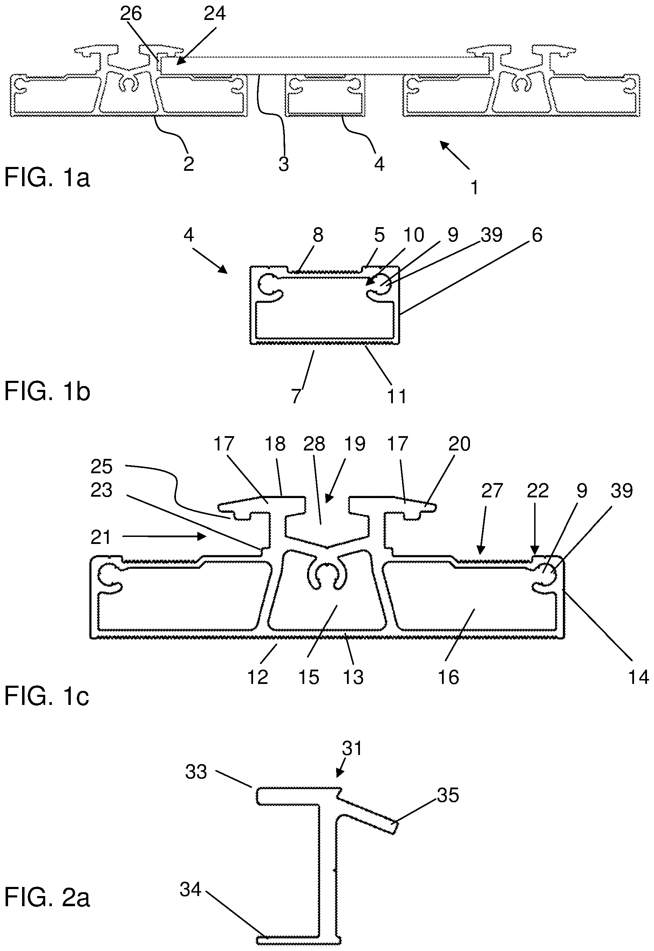

FIG. 1a is a cross sectional schematic drawing illustrating some basic components for a floor plate. A plate structure 1 is illustrated comprising two rail members 2 in between which a plate element 3 is provided. In order to support the plate element 3, a support profile 4 is attached to the underside of the plate element 3.

FIG. 1b illustrates in greater detail a cross section of the support profile 4. It is largely of rectangular cross section with an upper side 5, sides 6 and an underside 7. The upper side 5 is provided with a recess 8 for accommodating glue for fastening the support profile to the plate element. The recess is provided with a corrugated or otherwise rough surface. The underside 7 is provided with a corrugated surface 11 or otherwise rough surface in order to have an improved grip on the glue used for fastening the support profile as part of a floor plate to the bottom of the interior space of a vehicle. The support profile 4 is provided with two circular partly-open channels 9, which are used as bushings for accommodating the winding of assembly screws in a fastening manner. The channels 9 have a partly-open region 10 to the side of the partly-open channel 9 over an angular interval of 60 degrees in order not to brake when screws are screwed into the partly-open channels 9 but, on the other hand, to be sufficiently stable to let the winding of the screw be fastened in the channel. These partly-open channels 9 are used for fastening a straight, rigid profile as an end-profile to the plate structure 1, therewith providing lateral stability to the floor plate 32, which will be explained in greater detail below. In order to increase the grip, the partly-open channels 9 are provided with a plurality of ribs 39.

FIG. 1c shows the rail member 2 is greater detail. The rail member 2 has an underside 12 provided with a corrugated surface 13 or otherwise rough surface in order to have an improved grip on the glue used for fastening the rail member 2 as part of a floor plate to the bottom of the interior space of a vehicle. Between the sides 14 of the rail member 2, three chambers are provided, a central chamber 15 and two side chambers 16, each chamber having a partly-open channel 9 for accommodating the winding of a screw. On the upper side, the rail member is provided with a two parallel rails 17 with a substantially flat upper surface 18 and forming an elongated slot 19 there in between.

Each rail 17 comprises a flange 20 that extends in a direction laterally away from the slot 19. Each of these two flanges 20 are part of a groove 21 formed largely by the upper side 22 of a side chamber 15 the outer side of the rail 17 and the flanges 20 that extend laterally from the rail 17. This groove is used for accommodating the plate element, as seen in FIG. 1a. Inside the groove 21, an end stop 23 is provided for the plate, defining the depth into which the edge region 24 (see FIG. 1a) of a properly dimensioned plate element 3 can be pushed under normal circumstances. Further, an upper protrusion 25 is provided, the protrusion 25 pointing downwards from the lateral flange 17 and defines thereby a distance between the protrusion 26 and the upper side of the side chamber 17; this distance corresponds to the thickness of the plate element that fits best into the groove 21 for stable conditions. The side chambers 16 are each provided with a recess 27 on their upper side 22 for accommodating glue for fastening the plate element 3 to the upper side 22 of the side chamber 16. The recess 27 in the side chambers and/or the recess 8 in the support profile are also provided with a corrugated or otherwise rough surface. Such recesses yield a larger surface area resulting in better attachment strength with the glue. However, these recesses could be smooth, alternatively. In order to increase the grip, the partly-open channels 9 are provided with a plurality of ribs 39.

When a properly dimensioned plate element 3 is provided in the groove 21, as illustrated in FIG. 1a, a further hollow 26, extending from the end stop 23 to the protrusion 25 around the edge 24 of the plate element 3, is used for accommodating glue around the edge 24 of the plate element 3.

Between the two rails 17, below the slot 19, a cavity 28 is provided with access to the cavity 28 from above through the slot 19, which is narrower than the cavity 28. Different types of fasteners can be used in connection with such cavity in order to fasten seats rail member 2. For example, a bar with threaded screw holes can be used inside the cavity for fastening of seat supports, if the seat supports are provided with bolts to be screwed into the threaded screw hols. Fastening the screws or bolts would urge the bar towards the underside of the rails 17 inside the cavity. Alternatively, a bar with a number of bolts extending from the bar can be inserted into the cavity to cooperate with corresponding screw holes and nuts. The advantage of such systems is that loosening of the screws/bolts allows a seat support, while still loosely fastened to the bar, to be freely pushed along the rail 17 and then finally tightly fastened to the rails 17 by tightening the screws that extend into the cavity 28. The cavity 28 is shown as rhombic but could have other shapes, for example rectangular or oval.

Alternatively, inserts can be inserted into the cavity, the inserts having a shape that is largely as an inverted T fitting into the cavity. Examples are shown in the above mentioned EP1028885. A further alternative is a dovetail insert, where two dove tail parts as forces apart and toward the sides of the slot 19, for example as illustrated in EP1034969.

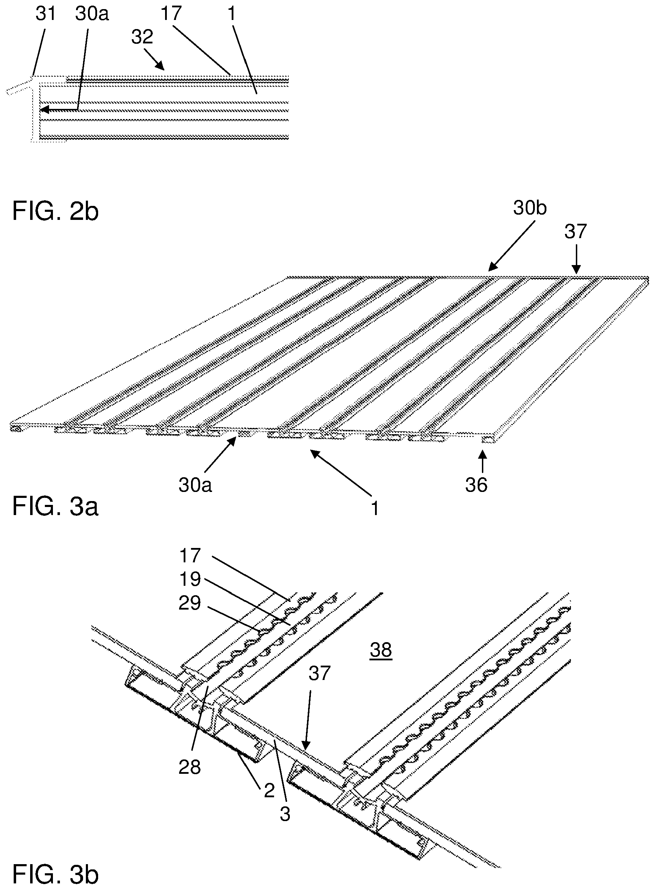

An alternative possibility for fastening is illustrated in FIG.3b, where the rails 17 are provided with corrugations 29 such that the slot 19 repeatedly alternates between narrow and wide. This allow insertion of an insert through the wide part of the slot 19 and prevents escaping of the insert from the cavity 28 if the insert is pushed half a period of the corrugations 29 and then fastened, for example if the insert has a shape largely of an inverted T. This is helpful for quick fastening and release of a chair. The latter is desired in case that high flexibility is desired with respect to moving of seats in a vehicle, especially when the vehicle is periodically being used for transport of wheel chairs, for which the ordinary seats have to be removed or displaced.

Different cross sectional shapes can be used for the cavity and the inserts, where the main principle is a cavity 28 with a narrowing slot 19 for withholding an insert having dimensions fitting into the cavity 28 but larger than smallest width of the slot 19.

Once a plurality of rail members 2, plate elements 3 and support profiles 4 have been cut into the correct dimensions according to the desired shape for the bottom of the vehicle, and the components as shown in FIG. 1 have been assembled into a plate structure 1 as shown in FIG. 3a, for example, there is still a need for providing structural stability if the final floor plate has to be lifted into the vehicle.

For this reason, the edges 30a, 30b at the two ends of the plate structure 1 with the rail members 2 and support profiles 4 and the plate elements 3 are provided with a stabilizing straight, rigid profile 31. This is illustrated in FIG. 2b, which is a side view of the floor plate 32 comprising the plate structure and the straight, rigid profiles 31 with a viewing direction perpendicular to the rails 17.

FIG. 2a shows an enlarged cross section of the straight, rigid profile 31. The straight, rigid profile comprises two flanges 33, 34 (an upper flange and a lower flange) extending on one side so as to form a concavity as a horizontal U-shape. The distance between the flanges 33, 34 corresponds to the height of the plate structure 1, for example 10 to 20 mm, or 20 to 40 mm, or 25 to 35 mm, or 40-60 mm, or 60-80 mm. The first, upper flange 33 of the two flanges abuts the plate elements 3 on the upper side of the plate structure 1 and the second, lower flange 34 abuts the underside 7 of the support profiles 4 and the underside 12 of the rail members 2. The straight, rigid profile 31 further comprises an inclined flange 35 onto which a ramp profile can be mounted with a flat upper side. Such ramp profile along the straight, rigid profile 31 extends in an inclined angle from the upper side of the floor plate for providing a smooth inclined ramp in the vehicle to the upper side of the floor plate.

On FIG. 3b, it is seen that the rails 17 are shorter than the rail member 2 itself in order for the straight, rigid profile 31 to extend across the rail members 31and abut the plate elements 3 on the upper side 37 of the plate structure 1.

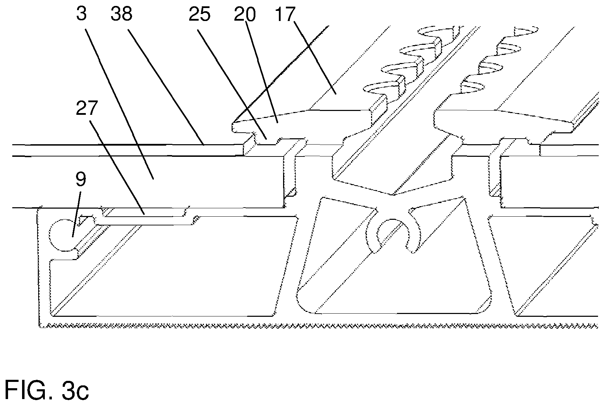

The plate element 3 is covered with a cover material 38, typically a carpet/textile or polymer sheet, such as vinyl. This is illustrated in greater detail on FIG. 3c, showing a part of the rail member 17 and the plate elements 3 on either side of the rail member 17. As shown, the protrusion 25, which forms part of the groove for the plate element 3 functions as an end stop for the cover material 38. During the assembly phase, the plate elements 3, optionally, are already provided with such cover material 38. This eases assembly as compared to covering the floor plate with the cover material after assembly, especially when tapes with glue on both sides are used for the mounting of the cover material, because such tapes makes it difficult to push such carpets under the lateral side flange 20 against the end stop 25. Similar problems exist on other prior art systems, for example the system of EP1028885, such that the invention with the covering of the plate elements before assembly solves a further general problem. Especially, in the case of the floor plate being delivered to a customer for point-of-use assembly, such pre-covering of the plate elements 3 before assembly is a great advantage.

For sake of illustration, it is pointed out that the embodiment in FIG. 3c differs slightly from the embodiment of FIG. 1 in that the recesses 27 in the side chambers 16 do not have a corrugated or rough surface but iare smooth, and the partly open channels 9 are not provided with internal ribs.

For example, the plate element 3 is a plywood plank or a polymer plank that has been cut into the correct width according to specific demands for distances between the rail members.

As illustrated, the sides of two parallel rail member 2 that are facing each other are not abutting each other but have a space in between, for example of at least 2 cm or at least 5 cm, or more.

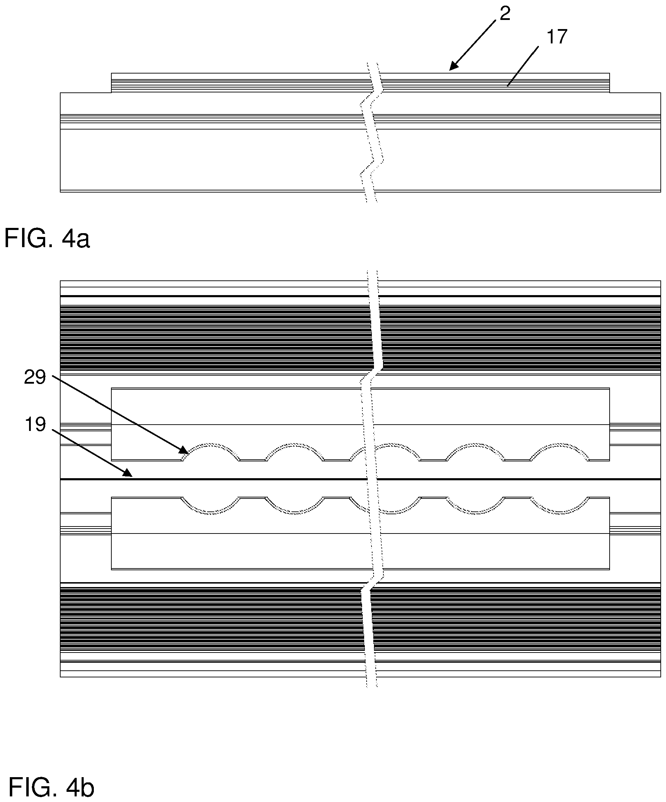

FIG. 4a shows a rail member 2 in side view, and FIG. 4b in top view.

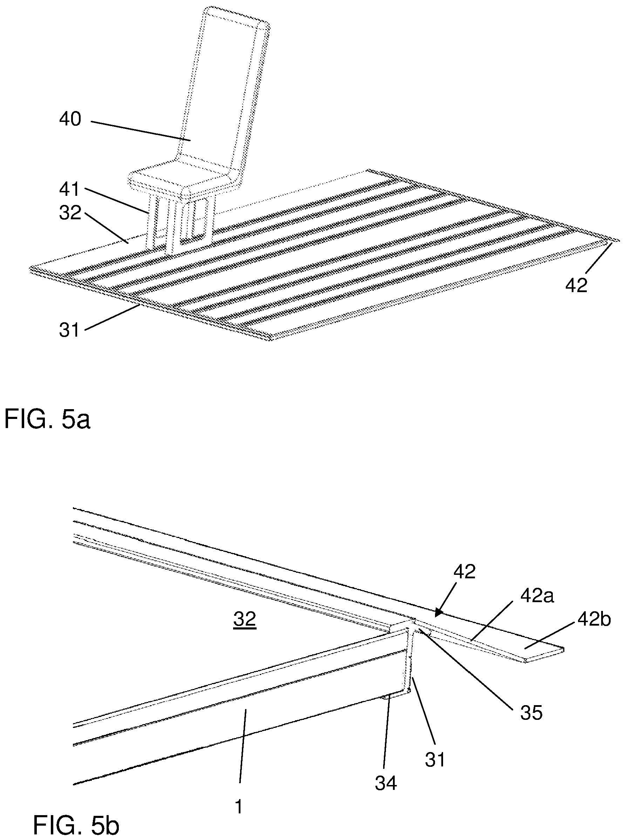

FIG. 5a shows a floor plate 32 with a seat 40 in an overview perspective. Details of the ramp profile 42 are shown in an enlarged view in FIG. 5b. The ramp profile 42 comprises an inclined ramp section 42a, which is fastened to the inclined section 35 of the straight, rigid profile 31. A flat ramp section 42b is configured to find support on the bottom of the vehicle space.

The invention also concerns a vehicle with a floor plate as described herewith in addition to the use of such a floor plate for a minibus.

### Reference number List

1 plate structure
2 rail member
3 plate element
4 support profile
5 upper side of support profile 4
6 side of support profile 4
7 underside of support profile 4
8 recess in upper side 5 of support profile 4
9 channels for screws in rail member 2 or support profile 4
10 partly open region of channel 9
11 corrugated surface of underside 7 of support profile 4
12 underside of rail member 2
13 corrugated surface of underside 12 of rail member 2
14 sides of rail member 2
15 central chamber of rail member 2
16 side chamber of rail member 2
17 rails of rail member 2
18 upper flat surface of rail 17
19 slot between rails 17
20 lateral flange of rail 17
21 groove at rail 17 for plate element 3
22 upper side of side chamber 16
23 end stop in groove 21
24 edge region of plate element 3
25 protrusion on lateral flange 20
26 hollow around edge of plate element 3 in groove 21
27 recess in upper side 22 of side chamber 16
28 cavity in the rail member 2 between the two rails 17 and below the slot 19
29 corrugations of rail 17
30a, 30b edges of plate structure 1
31 straight, rigid profile for edges 30a, 30b
32 floor plate including plate structure 1 and straight rigid profile 31
33 upper flange of straight, rigid profile 31
34 lower flange of straight, rigid profile 31
35 inclined flange of straight, rigid profile 31
36 underside of plate structure 1
37 upper side of plate structure 1
38 cover material on top plate element 3
39 ribs in partly-open channel 9
40 seat
41 seat support
42 ramp profile
42a inclined ramp section
42b flat ramp section.

## Claims

1. A floor plate for an automotive vehicle, wherein the floor plate (32) has dimensions suitable for covering the bottom of an interior space of a vehicle at least part of the bottom; the floor plate (32) having an upper side for mounting at least one seat (40) and an underside for abutting and permanent fastening the assembled floor plate (32) to the bottom; wherein the floor plate (32) comprises a plate structure (1) assembled of a plurality of parallel rail members (2) and a plurality of plate elements (3); wherein the plate structure (1) has a first edge and a second edge extending in a perpendicular direction relatively to the parallel rail members (2) and at opposite ends of the plate structure (1); the rail members (2) having connection means for fastening seats (40) with their supports (41) in the connection means; the plate elements (3) being made of a different material than the rail members (2); **characterised in that** the plate structure (1) is assembled with at least one plate element (3) separating each of two parallel rail members (2) with an adjusting distance; and the floor plate (32) comprises a first straight, rigid profile (31) of a length corresponding to the length of the first edge (30a) and fastened to the first edge; or comprising a first and a second straight, rigid profile (31) of a length corresponding to the length of the first edge and the second edge, respectively, and fastened to the first edge (30a) and the second edge (30b), respectively, for providing mechanical rigidity of the floor plate (32) against bending in a plane normal to the parallel rail members (2).

2. A floor plate according to claim 1, wherein the first straight, rigid profile (31) is fastened to ends of the rail members (2) or the plate element (3) or to both with fastening elements different from glue or in addition to glue.

3. A floor plate according to claim 2, wherein the rail members (2) are provided with channels 9 for providing bushings for fastening screws to the bushings, and wherein the first straight, rigid profile (31) is fastened to the rail members (2) by screws extending through screw holes in the first straight, rigid profile (31) and into the bushings.

4. A floor plate according to any one of the claims 1-3, the floor plate (32) comprising support profiles (4) on one side of the plate elements (3) of the plate structure (1) for supporting the plate elements (3) against the bottom; the support profiles (4) not being directly connected to the rail members (2) but having a distance to the rail members (2) of at least 5 cm.

5. A floor plate according to claim 4, wherein the first straight, rigid profile (31) has two parallel flanges (33, 34) extending from one side of the first straight, rigid profile (31) and along the first straight rigid profile (31); wherein the first flange (33) of the two flanges abuts the plate elements (3) on the upper side of the floor plate (32) and the second flange (34) of the two flanges abuts the underside of the support profiles (4) and the underside of the rail members (2).

6. A floor plate according to any one of the claims 1-5, comprising a ramp profile (42) with a flat upper side and fastened to and along the first straight, rigid profile (31); the ramp profile (42) extending in an inclined angle from one side of the floor plate (32), which is the upper side of the floor plate (32), for providing a smooth inclined ramp to the upper side of the floor plate (32).

7. A floor plate according to any one of the claims 1-6, wherein the rail members (2) are provided as metal profiles, and the plate elements (3) are provided as plywood or polymer plates.

8. A method for mounting at least one seat in an automotive vehicle with a vehicle body and an interior space; the method comprising providing dimensions of a bottom of the interior space, assembling a floor plate (32) according to these dimensions and according to the claims 1-7, or a number of floor plates which in combination correspond to these dimensions, remote from the vehicle, inserting the assembled floor plate (32) into the interior space, and permanent fastening the assembled floor plate (32) to the bottom; the floor plate (32) having an upper side for mounting seats (40) and an underside for abutting the bottom; wherein the method further comprises assembling a plurality of parallel rail members (2) and a plurality of plate elements (3) into a plate structure (1); wherein the plate structure (1) has a first edge (30a) and a second edge (30b) extending in a perpendicular direction relatively to the parallel rail members (2) and at opposite ends of the plate structure (1); the rail members (2) having connection means (19, 29) for fastening seats (40) with their supports (41) in the connection means (19, 29); the plate elements (3) being made of a different material than the rail members (2); **characterised in that** the method comprises assembling the plate structure (1) with at least one plate element (3) between each of two parallel rail members (2) with an adjusting distance; and the method comprises, before inserting the floor plate (32) into the interior space, increasing the mechanical rigidity of the floor plate (32) against bending in a plane normal to the parallel rail members (2) by fastening to the first edge (30a) a first straight, rigid profile (31) of a length corresponding to the length of the first edge (30a); or fastening to the first edge (30a) and second edge (30b), respective, a first and a second straight, rigid profile (31) of a length corresponding to the length of the first edge (30a) and the second edge (30b), respectively.

9. A method according to claim 8, wherein the method comprises fastening the first straight, rigid profile (31) to ends of the rail members (2) or to the plate element (3) (3) or to both with fastening elements different from glue or in addition to glue.

10. A method according to claim 9, wherein the method comprises fastening the first straight, rigid profile (31) or the second rigid profile or both to the rail members (2) by screwing with screws or bolts, by clamps, or by a tongue and groove connection and therewith tightening the ends of the rail members close and solidly to the first straight rigid profile or to the second rigid profile or to both.

11. A method according to any of the claims 8-10, the method comprises fastening support profiles (4) to the plate elements (3) on only one side the floor plate (32), which is the underside of the floor plate (32), for supporting the plate elements (3) against the bottom; the support profiles (4) not abutting the rail members (2) but having a distance to the rail members (2) of at least 5 cm.

12. A method according to any of the claims 8-11, comprising fastening seats (40) with their supports (41) in the connection means (19, 29).

13. A method according to any of the claims 8-12, wherein the method comprises providing a ramp profile (42) with a flat upper side and fastening the ramp profile (42) to and along the first straight, rigid profile (31); the ramp profile extending in an inclined angle from one side of the floor plate (32), which is the upper side of the floor plate (32), for providing a smooth inclined ramp from the bottom to the upper side of the floor plate (32).

14. A method according to any of the claims 8-13, wherein the rail members (2) are provided as metal profiles, and the plate elements (3) are provided as plywood or polymer plates.

15. A method according to any of the claims 8-14, the method further comprising covering the plate elements (3) with a carpet or polymer sheeting before assembly of the plate structure (1).

16. A method according to any of the claims 8-15, the method comprising receiving dimensional parameters for a specific vehicle bottom at a producer site; providing components for a floor plate including a plurality of rail members and plate elements, as well as the first straight, rigid profile, and optionally a plurality of support profiles; according to the parameters, shaping the components to provide the floor plate covering the specific vehicle bottom if assembled, including cut outs for wheel boxes, if present in the dimensional parameters; packing the components as an assembly-kit into a box, and sending the box to a receiver remote from the producer site for assembly before insertion into the specific vehicle.

17. A kit for a floor plate according to any one of the claims 1 - 7, wherein the kit is provided in a box and comprises, in an disassembled state, components for providing a floor plate (32), the floor plate having dimensions corresponding to the bottom or at least part of the bottom of a vehicle space, including optionally necessary cut-out for wheel boxes; the components comprising the plurality of rail members (17), the plate elements (3), a textile or polymer sheet material (38) provided on top of the plate elements (3), and the first straight rigid profile (31), and optionally support profiles.

## Patentansprüche

1. Bodenplatte für ein Kraftfahrzeug, wobei die Bodenplatte (32) Abmessungen aufweist, die zum Abdecken des Bodens eines Innenraums eines Fahrzeugs, zumindest eines Teils des Bodens, geeignet sind; wobei die Bodenplatte (32) eine Oberseite zum Anbringen mindestens eines Sitzes (40) und eine Unterseite zum Anlegen und dauerhaften Befestigen der zusammengebauten Bodenplatte (32) an dem Boden aufweist; wobei die Bodenplatte (32) einen Plattenaufbau (1) aufweist, der aus einer Vielzahl von parallelen Schienenbauteilen (2) und einer Vielzahl von Plattenelementen (3) zusammengebaut ist; wobei der Plattenaufbau (1) eine erste Kante und eine zweite Kante aufweist, die sich in einer senkrechten Richtung in Bezug auf die parallelen Schienenbauteile (2) und an gegenüberliegenden Enden des Plattenaufbaus (1) erstrecken; wobei die Schienenbauteile (2) Verbindungsmittel zum Befestigen von Sitzen (40) mit ihren Stützen (41) in den Verbindungsmitteln aufweisen; wobei die Plattenelemente (3) aus einem anderen Material als die Schienenbauteile (2) gefertigt sind; **dadurch gekennzeichnet, dass** der Plattenaufbau (1) aus mindestens einem Plattenelement (3), das jedes der zwei parallelen Schienenbauteile (2) mit einer Einstellentfernung trennt, zusammengebaut ist; und die Bodenplatte (32) ein erstes gerades, steifes Profil (31) mit einer Länge, die der Länge der ersten Kante (30a) entspricht, und das an der ersten Kante befestigt ist, umfasst; oder ein erstes und ein zweites gerades, steifes Profil (31) mit einer Länge, die der Länge der ersten Kante bzw. der zweiten Kante entspricht, und die an der ersten Kante (30a) bzw. der zweiten Kante (30b) befestigt sind, umfasst, um eine mechanische Steifigkeit der Bodenplatte (32) gegen Verbiegen in einer Ebene normal zu den parallelen Schienenbauteilen (2) bereitzustellen.

2. Bodenplatte nach Anspruch 1, wobei das erste gerade, steife Profil (31) an Enden der Schienenbauteile (2) oder dem Plattenelement (3) oder an beiden mit anderen Befestigungselementen als Klebstoff oder zusätzlich zu Klebstoff befestigt ist.

3. Bodenplatte nach Anspruch 2, wobei die Schienenbauteile (2) mit Kanälen (9) zum Bereitstellen von Buchsen zum Befestigen von Schrauben in den Buchsen versehen sind, und wobei das erste gerade, steife Profil (31) an den Schienenbauteilen (2) mittels Schrauben, die sich durch Schraubenlöcher in dem ersten geraden, steifen Profil (31) und in die Buchsen erstrecken, befestigt ist.

4. Bodenplatte nach einem der Ansprüche 1 - 3, wobei die Bodenplatte (32) Stützprofile (4) auf einer Seite der Plattenelemente (3) des Plattenaufbaus (1) zum Stützen der Plattenelemente (3) gegen den Boden umfasst; wobei die Stützprofile (4) nicht direkt mit den Schienenbauteilen (2) verbunden sind, sondern einen Abstand von mindestens 5 cm zu den Schienenbauteilen (2) aufweisen.

5. Bodenplatte nach Anspruch 4, wobei das erste gerade, steife Profil (31) zwei parallele Flansche (33, 34) aufweist, die sich von einer Seite des ersten geraden, steifen Profils (31) und entlang des ersten geraden, steifen Profils (31) erstrecken; wobei der erste Flansch (33) der zwei Flansche an den Plattenelementen (3) auf der Oberseite der Bodenplatte (32) anliegt und der zweite Flansch (34) der zwei Flansche an der Unterseite der Stützprofile (4) und der Unterseite der Schienenbauteile (2) anliegt.

6. Bodenplatte nach einem der Ansprüche 1 - 5, umfassend ein Rampenprofil (42) mit einer flachen Oberseite und befestigt an dem und entlang des ersten geraden, steifen Profils (31); wobei sich das Rampenprofil (42) in einem geneigten Winkel von einer Seite der Bodenplatte (32) erstreckt, welche die Oberseite der Bodenplatte (32) ist, um eine gleichmäßig geneigte Rampe zur Oberseite der Bodenplatte (32) bereitzustellen.

7. Bodenplatte nach einem der Ansprüche 1 - 6, wobei die Schienenbauteile (2) als Metallprofile bereitgestellt sind und die Plattenelemente (3) als Sperrholz- oder Polymerplatten bereitgestellt sind.

8. Verfahren zum Anbringen mindestens eines Sitzes in einem Kraftfahrzeug mit einer Fahrzeugkarosserie und einem Innenraum; wobei das Verfahren Bereitstellen von Abmessungen eines Bodens des Innenraums, Zusammenbauen einer Bodenplatte (32) gemäß diesen Abmessungen und gemäß den Ansprüchen 1 - 7, oder einer Anzahl von Bodenplatten, die in Kombination diesen Abmessungen entsprechen, entfernt vom Fahrzeug, Einsetzen der zusammengebauten Bodenplatte (32) in den Innenraum und dauerhaftes Befestigen der zusammengebauten Bodenplatte (32) an dem Boden umfasst; wobei die Bodenplatte (32) eine Oberseite zum Anbringen von Sitzen (40) und eine Unterseite zum Anliegen am Boden aufweist; wobei das Verfahren ferner Zusammenbauen einer Vielzahl von parallelen Schienenbauteilen (2) und einer Vielzahl von Plattenelementen (3) zu einem Plattenaufbau (1) umfasst; wobei der Plattenaufbau (1) eine erste Kante (30a) und eine zweite Kante (30b) aufweist, die sich in einer senkrechten Richtung in Bezug auf die parallelen Schienenbauteile (2) und an gegenüberliegenden Enden des Plattenaufbaus (1) erstrecken; wobei die Schienenbauteile (2) Verbindungsmittel (19, 29) zum Befestigen der Sitze (40) mit ihren Stützen (41) in den Verbindungsmitteln (19, 29) aufweisen; wobei die Plattenelemente (3) aus einem anderen Material als die Schienenbauteile (2) gefertigt sind; **dadurch gekennzeichnet, dass** das Verfahren Zusammenbauen des Plattenaufbaus (1) mit mindestens einem Plattenelement (3) zwischen jedem der zwei parallelen Schienenbauteile (2) mit einer Einstellentfernung umfasst; und dass das Verfahren, vor dem Einsetzen der Bodenplatte (32) in den Innenraum, Erhöhen der mechanischen Steifigkeit der Bodenplatte (32) gegen Verbiegen in einer Ebene normal zu den parallelen Schienenbauteilen (2) mittels Befestigen eines ersten geraden, steifen Profils (31) mit einer Länge, die der Länge der ersten Kante (30a) entspricht, an der ersten Kante (30a); oder mittels Befestigen eines ersten und eines zweiten geraden, steifen Profils (31) mit einer Länge, die der Länge der ersten Kante (30a) bzw. der zweiten Kante (30b) entspricht, an der ersten Kante (30a) bzw. der zweiten Kante (30b), umfasst.

9. Verfahren nach Anspruch 8, wobei das Verfahren Befestigen des ersten geraden, steifen Profils (31) an Enden des Schienenbauteils (2) oder an dem Plattenelement (3) oder an beiden mit anderen Befestigungselementen als Klebstoff oder zusätzlich zu Klebstoff umfasst.

10. Verfahren nach Anspruch 9, wobei das Verfahren Befestigen des ersten geraden, steifen Profils (31) oder des zweiten steifen Profils oder beider an den Schienenbauteilen (2) mittels Verschrauben mit Schrauben oder Bolzen, mittels Klemmen, oder mittels einer Nut- und Federverbindung und somit Festziehen der Enden der Schienenbauteile nahe und dauerhaft an dem ersten geraden, steifen Profil oder dem zweiten steifen Profil oder an beiden umfasst.

11. Verfahren nach einem der Ansprüche 8 - 10, wobei das Verfahren Befestigen von Stützprofilen (4) an den Plattenelementen (3) nur auf einer Seite der Bodenplatte (32), welche die Unterseite der Bodenplatte (32) ist, umfasst, um die Plattenelemente (3) gegen den Boden zu stützen; wobei die Stützprofile (4) nicht an den Schienenbauteilen (2) anliegen, sondern einen Abstand von mindestens 5 cm zu den Schienenbauteilen (2) aufweisen.

12. Verfahren nach einem der Ansprüche 8 - 11, umfassend Befestigen der Sitze (40) mit ihren Stützen (41) in den Verbindungsmitteln (19, 29).

13. Verfahren nach einem der Ansprüche 8 - 12, wobei das Verfahren Bereitstellen eines Rampenprofils (42) mit einer flachen Oberseite und Befestigen des Rampenprofils (42) an dem und entlang des ersten geraden, steifen Profils (31) umfasst; wobei sich das Rampenprofil in einem geneigten Winkel von einer Seite der Bodenplatte (32) erstreckt, welche die Oberseite der Bodenplatte (32) ist, um eine gleichmäßig geneigte Rampe von dem Boden zur Oberseite der Bodenplatte (32) bereitzustellen.

14. Verfahren nach einem der Ansprüche 8 - 13, wobei die Schienenbauteile (2) als Metallprofile bereitgestellt sind und die Plattenelemente (3) als Sperrholz- oder Polymerplatten bereitgestellt sind.

15. Verfahren nach einem der Ansprüche 8 - 14, wobei das Verfahren ferner Bedecken der Plattenelemente (3) mit einem Teppich oder einer Polymerverschalung vor dem Zusammenbau des Plattenaufbaus (1) umfasst.

16. Verfahren nach einem der Ansprüche 8 - 15, wobei das Verfahren Empfangen von Abmessungsparametern für einen bestimmten Fahrzeugboden an einem Herstellungsort; Bereitstellen von Komponenten für eine Bodenplatte einschließlich einer Vielzahl von Schienenbauteilen und Plattenelementen, sowie des ersten geraden, steifen Profils und optional einer Vielzahl von Stützprofilen; Formen der Komponenten gemäß den Parametern, um die Bodenplatte, die den bestimmten Fahrzeugboden nach dem Zusammenbau bedeckt, bereitzustellen, einschließlich Ausschnitten für Radkästen, falls in den Abmessungsparametern vorhanden; Verpacken der Komponenten als ein Montagebausatz in einer Kiste, und Senden der Kiste an einen Empfänger entfernt von dem Herstellungsort zum Zusammenbau vor Einsetzen in das bestimmte Fahrzeug umfasst.

17. Bausatz für eine Bodenplatte nach einem der Ansprüche 1 - 7, wobei der Bausatz in einer Kiste bereitgestellt wird und Komponenten zum Bereitstellen einer Bodenplatte (32) in einem nicht zusammengebauten Zustand umfasst, wobei die Bodenplatte Abmessungen aufweist, die dem Boden oder zumindest einem Teil des Bodens eines Fahrzeugraums entsprechen, einschließlich optional notwendiger Ausschnitte für Radkästen; wobei die Komponenten die Vielzahl der Schienenbauteile (17), die Plattenelemente (3), ein Textil- oder Polymerverschalungsmaterial (38), das auf der Oberseite der Plattenelemente (3) vorgesehen ist, und das erste gerade, steife Profil (31) und optional Stützprofile umfassen.

## Revendications

1. Plaque de plancher pour un véhicule automobile, dans laquelle la plaque de plancher (32) comprend des dimensions adaptées pour couvrir le fond, ou au moins une partie du fond, dans un espace intérieur d'un véhicule, la plaque de plancher (32) ayant une face supérieure pour le montage d'au moins un siège (40) et une face inférieure pour être en butée contre la plaque de plancher (32) et pour une fixation permanente de la plaque de plancher assemblée (32), dans laquelle la plaque de plancher (32) comprend une structure de plaque (1) assemblée de plusieurs éléments de rails parallèles (2) et plusieurs éléments de plaque (3), dans laquelle la structure de plaque (1) comprend un premier bord et un deuxième bord s'étendant dans une direction perpendiculaire par rapport aux éléments de rails parallèles (2) et aux côtés opposées de la structure de plaque (1), les éléments de rails (2) comprennent des moyens de connexion pour fixation des sièges (40) à leurs supports (41) dans les moyens de connexion, les éléments de plaque (3) sont faits d'un matériau différent des éléments de rails (2), **caractérisée en ce que** la structure de plaque (1) est assemblée avec au moins un élément de plaque (3) séparant chacun des deux éléments de rails parallèles (2) avec une distance ajustable, et la plaque de plancher (32) comprend un premier profilé droit et rigide (31) avec une longueur correspondant à la longueur du premier bord (30a) et fixé au premier bord, ou elle comprend un premier et un deuxième profilé droit et rigide (31) avec une longueur correspondant à la longueur du premier bord et le deuxième bord respectivement et fixée au premier bord (30a) et au deuxième bord (30b) respectivement pour établir une rigidité mécanique de la plaque de plancher (32) pour éviter une inclinaison dans un plan normal des éléments de rails parallèles.

2. Plaque de plancher selon la revendication 1, dans laquelle le premier profilé droit et rigide (31) est fixé à des extrémités des éléments de rails (2) ou à l'élément de plaque (3) ou à tous les deux avec des éléments de fixation différents du colle ou en plus du colle.

3. Plaque de plancher selon la revendication 2, dans laquelle les éléments de rails (2) sont réalisés avec des rainures 9 pour fournir des douilles afin de pouvoir serrer des vis dans ces douilles, et dans laquelle le premier profilé droit et rigide (31) est fixé aux éléments de rails (2) par des vis s'étendant à travers des trous de vis dans le premier profilé droit et rigide (31) et dans les douilles.

4. Plaque de plancher selon l'une quelconque des revendications 1 à 3, la plaque de plancher (32) comprend des profilés porteurs (4) sur une côté des éléments de plaque (3) de la structure de plaque (1) pour porter les éléments de plaque (3) par rapport au fond ; les profilés porteurs (4) n'étant pas directement reliés aux éléments de rails (2), mais ayant une distance aux éléments de rails (2) d'au moins 5 cm.

5. Plaque de plancher selon la revendication 4, dans laquelle le premier profilé droit et rigide (31) comprend deux brides parallèles (33, 34) s'étendant d'un côté du premier profilé droit et rigide (31) et le long du premier profilé droit et rigide (31), dans laquelle la première bride (33) des deux brides est en butée contre les éléments de plaque (3) sur la face supérieure de la plaque de plancher (32), et la deuxième bride (34) des deux brides est en butée contre la face inférieure des profilés porteurs (4) et la face inférieure des éléments de rails (2).

6. Plaque de plancher selon l'une quelconque des revendications 1 à 5, comprenant un profilé descendant (42) ayant une face supérieure plate et étant fixé au premier profilé droit et rigide (31) et le long du premier profilé droit et rigide (31), le profilé descendant (42) s'étend dans un angle incliné à partir d'une face de la plaque de plancher (32), qui est la face supérieure de la plaque de plancher (32), pour réaliser une descente inclinée et lisse vers la face supérieure de la plaque de plancher (32).

7. Plaque de plancher selon l'une quelconque des revendications 1 à 6, dans laquelle les éléments de rails (2) sont réalisés comme des profilés métalliques, et les éléments de plaque (3) sont des contreplaqués ou des plaques en polymère.

8. Procédé pour monter au moins un siège dans un véhicule automobile ayant une carrosserie et un espace intérieur, le procédé comprenant des dimensions d'un fond de l'espace intérieur, un assemblage d'une plaque de plancher (32) selon ces dimensions et selon les revendications 1 à 7 ou de plusieurs plaques de plancher qui, en combinaison, correspondent à ces dimensions, et en étant distant du véhicule, une introduction de la plaque de plancher (32) assemblée à l'espace intérieur, et une fixation permanente au fond de la plaque de plancher (32) assemblée, la plaque de plancher (32) ayant une face supérieure pour monter des sièges (40) et une face inférieure pour être en butée contre le fond, dans lequel le procédé comprend encore un assemblage de plusieurs éléments de rails parallèles (2) et de plusieurs éléments de plaque (3) pour obtenir une structure de plaque (1), dans lequel la structure de plaque (1) comprend un premier bord (30a) et un deuxième bord (30b) s'étendant dans une direction perpendiculaire vis-à-vis des éléments de rails parallèles (2) et à des extrémités opposées de la structure de plaque (1), les éléments de rail (2) ayant des moyens de connexion (19, 29) pour fixer des sièges (40) à leurs supports (41) dans les moyens de connexion (19, 29), les éléments de plaque (3) étant fait d'un autre matériel que celui des éléments de rails (2), **caractérisé en ce que** le procédé comprend un assemblage de la structure de plaque (1) ayant au moins un élément de plaque (3) entre chacun des deux éléments de rails parralèles (2) à une distance ajustable, et, avant l'introduction de la plaque de plancher (32) à l'espace intérieur, le procédé comprend une hausse de la rigidité mécanique de la plaque de plancher (32), pour éviter une flexion dans un plan normal par rapport aux éléments de rails (2), en fixant au premier bord (30a) un premier profilé droit et rigide (31) ayant une longueur correspondant à la longueur du premier bord (30a), ou en fixant au premier bord (30a) et au deuxième bord (30b) respectifs un premier et un deuxième profilé droit et rigide (31) ayant une longueur correspondant à la longueur du premier bord (30a) et du deuxième bord (30b) respectifs.

9. Procédé selon la revendication 8, dans lequel le procédé comprend une fixation du premier profilé droit et rigide (31) à des extrémités des éléments du rails (2) ou à l'élément de plaque (3) ou à tous les deux avec des éléments de fixation différents du colle ou en plus du colle.

10. Procédé selon la revendication 9, dans lequel le procédé comprend une fixation du premier profilé droit et rigide (31), ou du deuxième profilé droit et rigide, ou de tous les deux, aux éléments de rails (2) par vissage avec des vis ou des boulons, par des brides, ou par connexion à rainure et languette, et ainsi serrer les extrémités des éléments de rails de façon ferme et solide au premier profilé droit et rigide, ou au deuxième profilé rigide, ou à tous les deux.

11. Procédé selon l'une quelconque des revendications 8 à 10, le procédé comprend une fixation des profilés porteurs (4) aux éléments de plaque (3) sur seulement une face de la plaque du plancher (32), qui est la face inférieure de la plaque de plancher (32), pour porter les éléments de plaque (3) par rapport au fond, les profilés porteurs (4) ne sont pas en butés contre les éléments de rails (2), mais à une distance d'au moins 5 cm des éléments de rails (2).

12. Procédé selon l'une quelconque des revendications 8 à 11, comprenant une fixation des sièges (40) aux supports (41) dans les moyens de connexion (19, 29).

13. Procédé selon l'une quelconque des revendications 8 à 12, dans lequel le procédé comprend une réalisation d'un profilé descendant (42) avec une face supérieure plate et une fixation du profilé descendant (42) au premier profilé droit et rigide (31) et au long du premier profilé droit et rigide (31), le profilé descendant s'étend dans un angle incliné à partir d'une face de la plaque de plancher (32), qui est la face supérieure de la plaque de plancher (32), pour réaliser une rampe inclinée et lisse à partir du fond et jusqu'à la face supérieure de la plaque de plancher (32).

14. Procédé selon l'une quelconque des revendications 8 à 13, dans lequel les éléments de rails (2) sont réalisés comme des profilés métalliques, et les éléments de plaque (3) sont des contreplaqués ou des plaques en polymère.

15. Procédé selon l'une quelconque des revendications 8 à 14, le procédé comprend encore une couverture des éléments de plaque (3) avec une moquette ou un tapis en polymère avant l'assemblage de la structure de plaque (1).

16. Procédé selon l'une quelconque des revendications 8 à 15, le procédé comprend une réception de paramètres de dimensions pour un fond d'un véhicule spécifique se trouvant sur un site de producteur, une réalisation des composants pour une plaque de plancher y compris plusieurs éléments de rails et plusieurs éléments de plaque, ainsi que le premier profilé droit et rigide, et éventuellement plusieurs profilés porteurs, et, selon les paramètres, un façonnage des composants pour réaliser la plaque de plancher couvrant le fond du véhicule spécifique, si assemblée, y compris des découpes pour les couvre-roues si elles figurent dans les paramètres de dimensions, un emballage en kit des composants dans une boîte et un envoi de la boîte à une destinataire se trouvant distant du producteur pour un assemblage avant l'introduction dans un véhicule spécifique.

17. Kit pour une plaque de plancher selon l'une quelconque des revendications 1 à 7, dans lequel le kit est fourni dans une boîte et, dans un état démonté, il comprend des composants pour réaliser une plaque de plancher (32), la plaque de plancher comprend des dimensions qui correspondent au fond, ou au moins une partie du fond, dans un espace de véhicule, éventuellement y compris des découpes nécessaires pour des couvre-roues, les composants comprennent la plupart des éléments de rails (17), des éléments de plaque (3), une matière textile ou en feuille polymère (38) réalisée au-dessus des éléments de plaque (3), et le premier profilé droit et rigide (31), et éventuellement des profilés porteurs.
